Europäisches Patentamt

European Patent Office

Office européen des brevets

(19)

(11) Veröffentlichungsnummer: **0 131 881**
**B1**

# (12) EUROPÄISCHE PATENTSCHRIFT

(45) Veröffentlichungstag der Patentschrift:
03.05.89

(21) Anmeldenummer: 84107975.9

(22) Anmeldetag: 07.07.84

(51) Int. Cl.⁴: **F 16 D 3/80**

(54) Drehelastische, schwingungsdämpfende Wellenkupplung.

(30) Priorität: 13.07.83 DE 3325214
04.01.84 DE 3400127
07.03.84 DE 3408286

(43) Veröffentlichungstag der Anmeldung:
23.01.85 Patentblatt 85/4

(45) Bekanntmachung des Hinweises auf die Patenterteilung:
03.05.89 Patentblatt 89/18

(84) Benannte Vertragsstaaten:
AT BE CH DE FR GB IT LI NL SE

(56) Entgegenhaltungen:
DE-A- 2 433 995
DE-A- 3 148 338

(73) Patentinhaber: Krönert, Curt, Dipl.-Ing.,
Rosshaldeweg 15, D-7292 Baiersbronn 6 (DE)

(72) Erfinder: Krönert, Curt, Dipl.-Ing., Rosshaldeweg 15,
D-7292 Baiersbronn 6 (DE)

(74) Vertreter: Wilhelm, Hans-Herbert, Dr.-Ing. et al, Wilhelm
& Dauster Patentanwälte Hospitalstrasse 8,
D-7000 Stuttgart 1 (DE)

## Beschreibung

Die Erfindung betrifft eine drehelastische, schwingungsdämpfende Wellenkupplung nach dem Oberbegriff des Patentanspruches 1.

Eine solche Wellenkupplung ist aus der DE-A-31 48 338 bekannt. Es sind (z.B. nach der DE-A-24 44 787 und DE-B-30 33 302) Kupplungen bekannt, bei denen zwischen einem Primär- und einem Sekundärteil radial gerichtete, durch Zwischenstücke eingespannte Blattfederpakete angeordnet sind, zwischen denen sich zwecks Dämpfung ölgefüllte Kammern befinden, wobei das Öl bei Belastung von einer Kammer zur anderen gepreßt wird.

Gemäß der US-A-25 13 379 ist eine Ausführung bekannt, bei der in Umfangsrichtung zur Drehachse tangential gerichtete Schraubenfedern angeordnet sind, die teilweise von topfartig ineinander schiebbaren Hülsen umgeben sind, durch deren Öffnungen das Dämpfungsöl strömt. Alle diese Konstruktionen lassen nur geringe Winkelausschläge zu und sind im Aufbau sehr kompliziert.

Durch die DE-A-32 28 673 A-1 ist ein für die Anwendung bei Fahrzeug-Reibungskupplungen bestimmter Drehschwingungsdämpfer bekannt, bei dem die Drehmomentübertragung vom wellenartig ausgebildeten Primärteil auf den von ihm getragenen etwa trommelartigen Sekundärteil über einen darin angeordneten ringförmigen Kupplungskörper erfolgt, der mit einer Längsverschiebungen zulassenden Schubeinrichtung (Trapezgewinde) in den Primärteil eingreift und mit dem Umfang des Sekundärteils durch eine Axialverzahnung verschiebbar verbunden ist, wobei sich beiderseits des Kupplungskörpers je eine Tellerfeder befindet, die sich an der Wandung des Sekundärteils abstützt.

Diese Art der Anordnung und der Beaufschlagungsweise der Federn ermöglicht zwar größere Winkelausschläge zwischen Primär- und Sekundärteil als bei den eingangs genannten Kupplungen; jedoch ist man durch die kleinstmögliche Steigung des Gewindes eingeschränkt, dessen Selbsthemmungsgrenze nicht erreicht werden darf.

Bei einer solchen Bauart ist bei jeder Drehrichtung immer nur eine Tellerfeder in Aktion, während die andere unbeteiligt bleibt. Dies muß als eine schlechte Ausnutzung des vorhandenen Federvolumens angesehen werden, welche den Nutzwert der Kupplung stark beeinträchtigt. Die wechselweise Beanspruchung der Federn bei Drehrichtungsumkehr bedingt auch eine erhebliche Vorspannung der Federn, die größer sein muß als die Betriebsbeanspruchung, wodurch dem Bereich der wirksamen Verdrehung weitere Grenzen gesetzt sind. Infolge der unmittelbaren Nähe des Kupplungskörpers zu den Tellerfedern kann durch Abrieb verunreinigtes Dämpfungsöl an das Gewinde gelangen, was zu einem vorzeitigen Verschleiß der Verschiebeeinrichtung und damit zu einer Verkürzung der Lebensdauer führen muß. Grundsätzlich unterliegen Kupplungsglieder, deren Schrägflächen tangential zur Drehachse liegen, wie im Falle der genannten DE-B-32 28 673 A1, auch einem nicht zu beseitigenden Verdrehspiel, durch das bei einer Drehmomentumkehr Geschwindigkeitsstöße erzeugt werden, die einen sehr schädlichen Einfluß auf die Kupplung und die angeschlossenen Maschinen ausüben.

Aus der eingangs genannten DE-A-31 48 338 ist eine Wellenkupplung in der Art einer Drehschwingungsabsorptionseinrichtung bekannt, bei der ein mit Öl beaufschlagtes Gehäuse mit einer Lamellenreibkupplung vorgesehen ist, deren Lamellen auf einer Seite mit einem Tellerfederpaar beaufschlagt ist und auf der anderen Seite axial an einem Kupplungsring anliegt, der aus axial in einer Verzahnung des Gehäuses geführt ist und an dem Primärteil der Kupplung mit axial vorspringenden Zähnen mit schrägen Flanken anliegt, die in korrespondierende, gebogene Ausnehmungen an der Stirnseite des Primärteiles eingreifen. Durch Verdrehen der beiden Kupplungsteile gegeneinander wird daher der Kupplungsring axial bewegt und drückt auf die Lamellenkupplung, die somit als Dämpfungsglied für Drehschwingungen wirkt. Da bei dieser Bauart nur ein Tellerfederpaar konzentrisch zur Abtriebswelle angeordnet ist, lassen sich mit einer solchen Ausführung nur relativ geringe Drehkräfte übertragen, wenn der Raumbedarf der Dämpfungseinrichtung nicht zu groß werden soll.

Die Erfindung hat sich die Aufgabe gestellt, eine Wellenkupplung dieser Art zu schaffen, die eine hohe spezifische Übertragungsfähigkeit besitzt und daher raumsparend ist, wobei der Übertragungsmechanismus, der die tangentiale Bewegung des Primärteils in eine Axialbewegung und von dort wieder in eine tangentiale Bewegung des Sekundärteils umsetzt, möglichst abriebfrei ist und das gesamte Federvolumen unabhängig von der Momentenrichtung voll ausnutzt.

Zur Lösung dieser Aufgabe werden bei einer Wellenkupplung der eingangs genanntn Art die kennzeichnenden Merkmale des Patentanspruches 1 vorgesehen. Durch diese Ausgestaltung wird eine Wellenkupplung mit einer geringen Zahl von Einzelteilen erreicht, die raumsparend Pakete von Federelementen, insbesondere Tellerfedern aufnimmt, die innen auf Bolzen geführt werden. Diese Kupplung ist auch dadurch, daß die Nabe ganz in das Gehäuse hineinragt, sehr schmal.

Durch die Anordnung der Stützscheibe wird erreicht, daß alle Federpakete gleichmäßig wirken und der Abrieb gering bleibt. Die Stützscheibe ist dabei zweckmäßig als Axiallager ausgebildet.

Eine besonders günstige Ausführungsform der Erfindung besteht darin, daß zwischen dem Primärteil und dem Sekundärteil zwei Kupplungsscheiben angeordnet sind, die auf den einander zugewandten Seiten mit den Vorsprüngen versehen sind, wobei beiderseits des Scheibenpaares Pakete von Tellerfedern angeordnet sind. Dadurch, daß hier mehr Federn, also auf zwei Seiten der Kupplungsscheiben für die Verdrehung zur Verfügung stehen, wird ein entsprechend größerer Verdrehwinkel erreicht. Ganz allgemein können die kranzartigen Vorsprünge mehr nach dem äußeren Durchmesser oder mehr nach dem inneren Durchmesser der Kupplungsscheiben hin verlegt werden, je nachdem, ob es bei der Auslegung auf ein höheres zu übertragendes Drehmoment und eine weniger große Verdrehung oder auf eine größere Verdrehung bei einem niedrigeren Drehmoment ankommt. Besonders ausgewogene Verhältnisse ergeben sich, wenn diese erfindungsgemäß etwa in der Mitte zwischen dem Außen- und dem Innendurchmesser der Kupplungsscheiben angeordnet sind.

An das Dämpfungsverhalten von hochdrehelastischen Kupplungen mit Flüssigkeitsdämpfung können verschiedene, von Anwendungsfällen und Betriebszuständen abhängige Anforderungen gestellt werden.

So kann die Forderung bestehen, daß mit zunehmendem Drehmoment die Flüssigkeitsdämpfung ansteigen soll, oder/und beim Nulldurchgang, d.h. bei kleinem Drehmoment, eine größere Dämpfung erwünscht ist. Ferner ergibt sich bei schwingungstechnisch schwierigen Anlagen auch der Wunsch, die Dämpfung nachträglich zu verändern. Bei bekannten Kupplungen ist letzteres nur durch Austausch von Bauteilen mit veränderten Drosselöffnungen oder Spalten möglich.

Eine vorteilhafte Weiterbildung der Erfindung sieht eine Einrichtung vor, durch die eine wahlweise feinfühlig steuerbare Dämpfung über den ganzen Drehmomentverlauf ermöglicht wird, wobei die Veränderung der Dämpfungscharakteristik entweder selbsttätig oder/und von außen her erfolgt. Dies wird dadurch erreicht, daß die Stützscheibe am Außenumfang und gegebenenfalls auch am Innenumfang mit Dichtungen versehen ist und das Gehäuse in zwei Kammern unterteilt, wobei in der Nähe der Drehachse eine Drosselöffnung zwischen den Kammern vorgesehen ist. An der Durchflußöffnung zwischen den Kammern kann ein am äußeren Ende mit einer Radialdichtung versehenes, rohrartiges Steuerteil vorgesehen sein, welches mit entsprechenden, im Primär- oder Sekundärteil gegebenen, axial gerichteten Kanälen zusammenwirkt, die mit mehreren auf achsparallelen Ebenen hintereinanderliegenden, ins Kupplungsinnere führenden Drosselöffnungen versehen sind, welche von der Radialdichtung während des Arbeitshubes überstrichen werden, wobei mindestens eine Drosselöffnung von der Stirnseite der Kupplung her mit einer Regelschraube o.dgl. in ihrem Querschnitt veränderbar ist.

Um die Dämpfung von außen her beeinflussen zu können, besteht eine vorteilhafte Ausführung darin, daß mindestens eine Drosselöffnung von der Stirnseite der Kupplung her mit einer Regelschraube im Querschnitt veränderbar ist. Die Regelschraube kann auch als selbsttätig arbeitendes, druckabhängiges Ventil ausgebildet sein, welches von außen nachstellbar ist.

Eine weitere günstige Ausführung der Erfindung, durch welche ebenfalls die Dämpfungscharakteristik verändert werden kann, besteht darin, daß die Radialdichtung nur in Teilbereichen des Arbeitshubes wirksam ist. Je nach der Bauweise der Kupplung kann als Durchflußöffnung zwischen den Kammern, z.B. die Kupplungsverzahnung zwischen der Kupplungsscheibe und dem Primärteil dienen, wobei das Steuerteil an der Kupplungsscheibe angeordnet ist.

Eine andere günstige Ausführungsform besteht darin, daß als Durchflußöffnung zwischen den Kammern Bohrungen in der Stützscheibe und in der anliegenden Kupplungsscheibe im Bereich der Bolzen liegen, an denen die Federelemente gehalten sind, wobei an jeder Bohrung der Stützscheibe ein Steuerteil angeordnet ist.

Drehelastische Kupplungen, deren Wirkungsweise darauf beruht, daß unter Last eine Umfangskraft in eine Axialkraft und von da wieder in eine Umfangskraft umgesetzt wird, haben, sofern die damit einhergehende Axialschiebung über reibungsbehaftete Kupplungsverbindungen erfolgt, den Nachteil, daß die Reibwerte Schwankungen unterliegen können, die unter anderem von der spezifischen Belastung der Werkstoffpaarung, der Schmiermittelzufuhr und der Gleitgeschwindigkeit abhängen. Sollen Kupplungen der erfindungsgemäßen Art feinfühlig auch bei hohen Frequenzen ansprechen, so kann es unter bestimmten Voraussetzungen zu einem Ruckgleiten kommen, das den gleichmäßigen Kraftverlauf stört.

Vorteilhaft ist es daher, Gleitreibung vollkommen zu vermeiden und die Verzahnung an der Kupplungsscheibe durch eine Kugelwälzverbindung zu ersetzen, wobei auf die aufwendige Steuerung der Kugeln, wie dies bei bekannten Konstruktionen von Gleichlaufgelenken üblich ist, verzichtet wird. Dabei kann davon ausgegangen werden, daß das Sekundärteil mit seinen axialen Vorsprüngen räumlich feststeht, während sich die Kupplungsscheibe unter der Wirkung des Drehmomentes axial verschiebt. Werden zwischen den axialen Vertiefungen der Kupplungsscheibe und des Sekundärteils Rollkörper, die in einem Käfig geführt werden, angeordnet, so stellt sich dieser Käfig unter Last zwangsläufig auf den halben axialen Weg der Kupplungsscheibe ein, d.h. auf den gleichen axialen Weg, den auch die Kugeln der Kupplungsverbindung zurücklegen.

In weiterer Ausgestaltung der Erfindung wird daher vorgesehen, den Bewegungsablauf des zwangsgeführten äußeren Käfigs zu nutzen, indem der Käfig der Kugelwälzverbindung über Bolzen o.dgl. mit dem äußeren Käfig der Rollkörper verbunden wird, so daß sich beide Käfige gemeinsam axial verschieben und die unterschiedlichen tangentialen Wege durch Längsschlitze am inneren Käfig ausgeglichen werden.

In den Zeichnungen sind verschiedene Ausführungsbeispiele der Erfindung dargestellt, die in der folgenden Beschreibung erläutert werden. Es zeigen:

Fig. 1 im Längsschnitt eine Kupplung mit einseitigen Federpaketen, mit Stützscheibe und mit einer doppelgelenkigen Kupplung an der Nabe,

Fig. 2 eine Kupplung mit zwei Kupplungsscheiben und beidseitigen Federpaketen und Rollkörpern im Längsschnitt,

Fig. 3 den Querschnitt A–B durch die Kupplung nach Fig. 2,

Fig. 4a bis d Abwicklungen der kranzartig angeordneten Vorsprünge in verschiedener Ausführungsform,

Fig. 5 die Einzelheit «B» der Fig. 1,

Fig. 6 eine Einzelheit der Ausbildung einer Variante der Fig. 1,

Fig. 7 eine andere Ausführung der Einzelheit der Variante der Fig. 1,

Fig. 8 eine weitere Einzelheit der Variante der Fig. 1,

Fig. 9 eine Einzelheit einer anderen Variante der Fig. 1 und

Fig. 10 den Schnitt C–D durch Fig. 9.

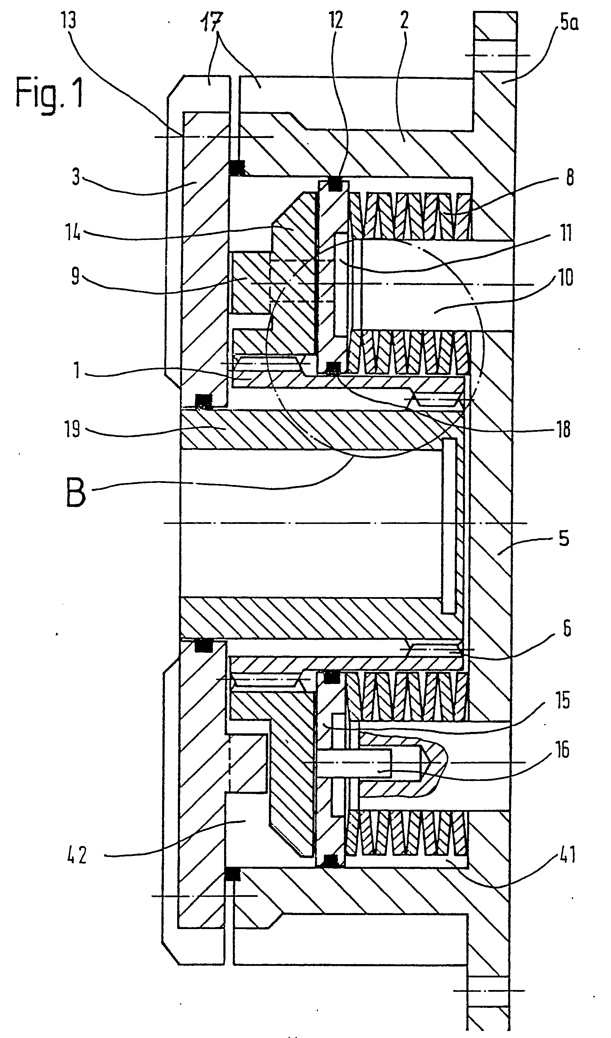

In Fig. 1 bezeichnete (1) den Primärteil, welcher mit dem Gehäuse (2) verbunden ist, das durch den Deckel (3) verschlossen ist. Am Deckel (3) ist der Sekundärteil (5) gehalten. Der Sekundärteil (5) ist mit einem Flansch (5a) zum Anschluß an die anzutreibende oder auch antreibende Maschine versehen. Zwischen dem Primärteil (1) und dem Sekundärteil (5) ist neben der Wandung des letzteren eine konzentrische, ringartige Kupplungsscheibe (14) angeordnet.

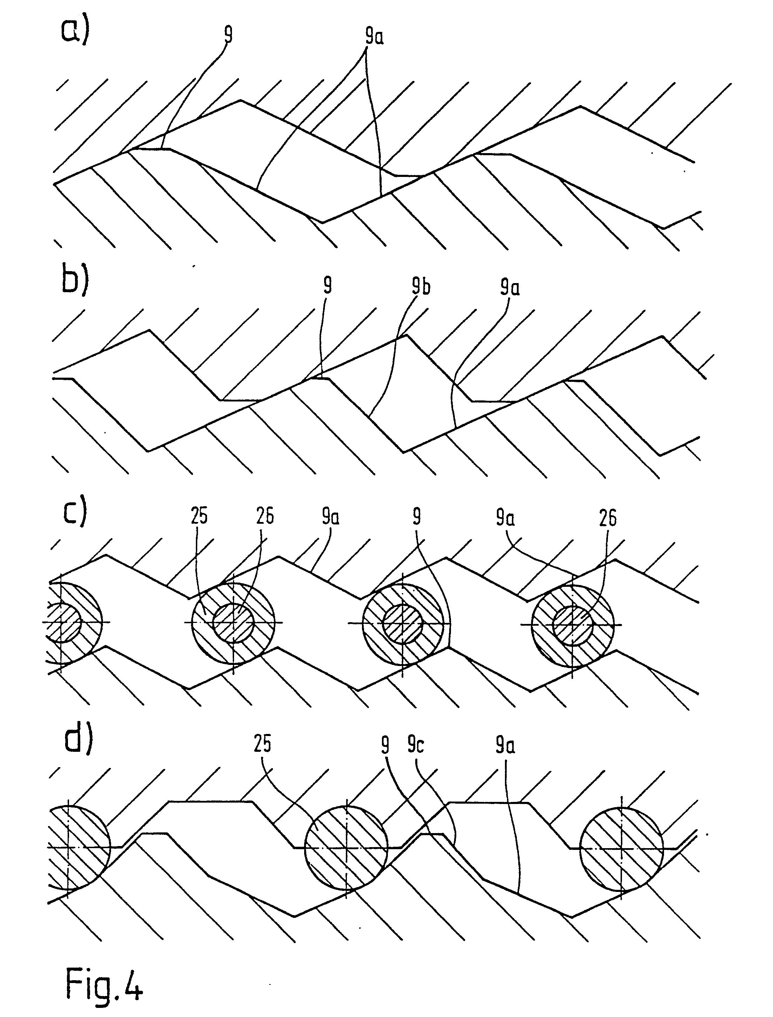

Bei Einleitung eines Drehmomentes in den Primärteil (1) wird die Kupplungsscheibe (14) mitgenommen und durch die Vorsprünge (9) auch der Sekundärteil (5). Gleichzeitig gleiten die Vorsprünge, deren Seitenflächen (9a) (s. Fig. 4a bis 4d) eine Neigung von z.B. 20° bis 40° haben, in Umfangsrichtung aufeinander auf, wobei durch die Axialkomponente der Aufgleitkraft Druck auf die Kupplungsscheibe (14) und über diese auf die zu einem Federpaket zusammengesetzten Federelement (8) ausgeübt wird, die als Tellerfedern ausgebildet sind. Dies kann bei steigendem Drehmoment so lange erfolgen, bis es, je nachdem, wie die Kupplung ausgelegt ist, entweder zu einem Durchrutschen der Vorsprünge (9) kommt, d.h. die Kupplung arbeitet als Überlastschutz für die angeschlossene Maschine, oder es werden Anschläge für die Begrenzung des Federweges vorgesehen, bei deren Erreichung die Kupplung dann drehstarr wirkt, d.h. es tritt ein Schutz der Kupplung ein. Letzteres ist in Fig. 1 dadurch vorgesehen, daß Ausnehmungen (11) einer noch zu beschreibenden Stützscheibe (15) in ihre Tiefe auf den zulässigen Federungsweg abgestellt sind.

Der Verdrehwinkel der Kupplung ist um so größer, je geringer die Neigung der Seitenflächen (9a) und je länger diese, d.h. je höher die Vorsprünge (9) sind. Bei entsprechender Abstimmung der Neigung und Länge dieser Seitenflächen und der Charakteristik der Federpakete lassen sich die Kupplungen mit ganz verschiedenen Eigenschaften, z.B. harte oder weiche, schaffen. Bei einer Neigung von 10! sind, wenn die Zahnkränze in günstiger Weise etwa auf dem halben Durchmesser der Kupplungsscheibe (14) liegen, Drehwinkel bis zu 30° zu erreichen. Vorteilhaft ist dabei, daß die Kupplung nach beiden Drehrichtungen in der gleichen Weise arbeitet, wobei jeweils alle Federpakete gleichzeitig beaufschlagt werden. Die Verzahnung ist völlig spielfrei und selbstnachstellend. Sie ist auch unempfindlich gegen Reibverschleiß. Dazu kommt auch, daß sie außerhalb des Bereiches der Tellerfedern liegt, bei denen gegebenenfalls Verschleiß auftreten kann. Die Spannung der Federelemente (8) kann durch Nachstellschrauben geregelt werden, was im Falle von Setzungen der Federn notwendig, aber auch zur Veränderung der Charakteristik erwünscht ist. Außerdem ist die Charakteristik der Kupplung auch durch Veränderung der zu Federpaketen zusammengesetzten Federelemente an sich regelbar, wobei stärkere oder schwächere Tellerfedern oder auch Kombinationen beider in Anwendung kommen können.

In Fig. 1 ist zwischen der Kupplungsscheibe (14) und den Federelementen (8) eine Stützscheibe (15) angeordnet, welche alle Federpakete überdeckt und durch Stifte (16), die in die Bolzen (10) eingreifen, gegenüber dem Sekundärteil (5) gegen Drehung fixiert ist. Die Stützscheibe ist mit Ausnehmungen (17) versehen, die als Anschläge für den Federungsweg dienen. Die Stützscheibe (15) trägt innen und außen Dichtungen (12 und 18), die die Kupplung in zwei Ölräume unterteilen, wobei die Verzahnung (6) als Drossel wirkt. Auf der anderen Seite ist die Stützscheibe (15) als Axiallager für die Kupplungsscheibe (14) ausgebildet, wodurch die Reibung, der die Kupplungsscheibe (14) durch die Federn ausgesetzt ist, erheblich vermindert wird. Der Primärteil (1) ist durch eine doppelgelenkige Kupplung mit der Nabe (19) der Antriebs- und Abtriebswelle verbunden, wodurch ohne Einschaltung anderer Mittel ein Ausgleich von Wellenversatz in radialer und axialer Richtung möglich ist. Zur besseren Kühlung ist das Gehäuse (2) und der Deckel (3) des Sekundärteils (5) mit Kühlrippen (17) versehen. Zur Erzielung einer doppelt so großen Verdrehung ist es gegebenenfalls möglich, je zwei Kupplungen der Bauart von Fig. 1 mit den Sekundärteilen (5) miteinander zu verbinden.

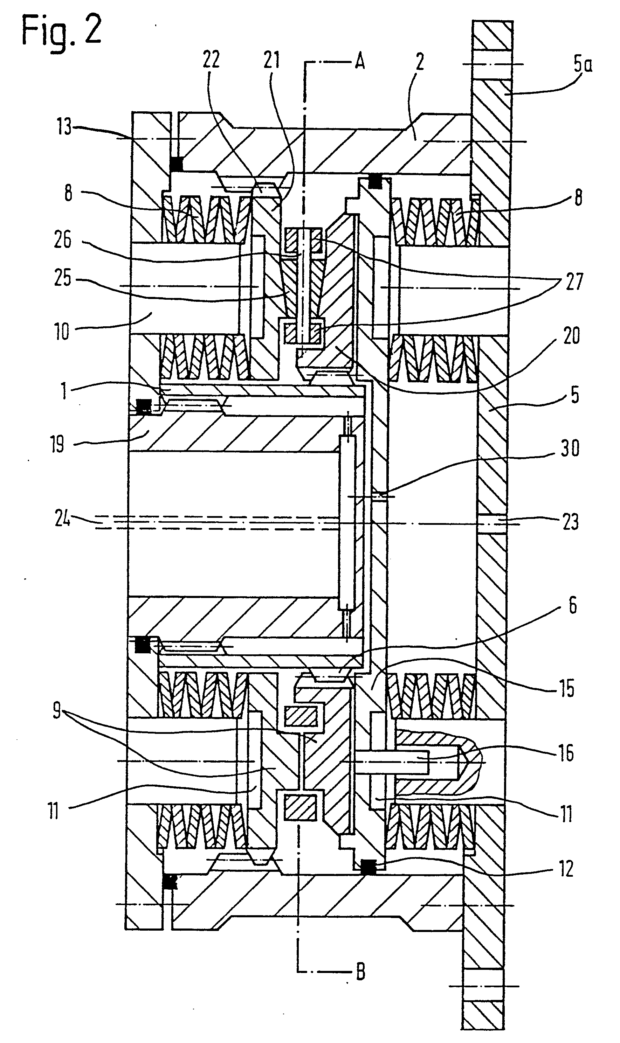

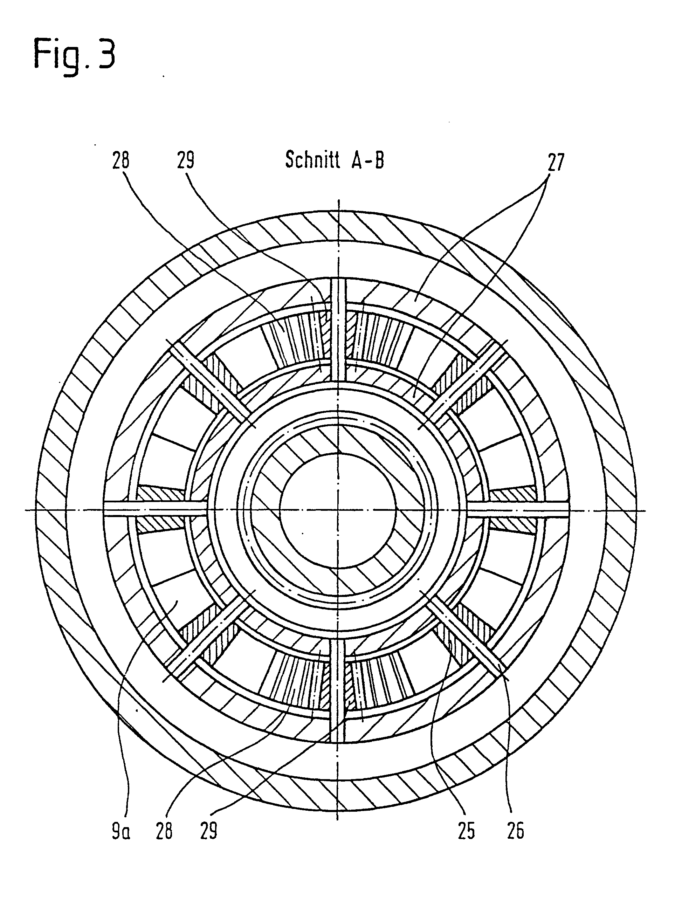

In den Fig. 2 und 3 sind zwischen dem Primärteil (1) und dem Gehäusemantel (2) des Sekundärteils (5) axial nebeneinanderliegend zwei konzentrisch, ringartig ausgebildete Kupplungsscheiben (20 und 21) angeordnet, von denen die Scheibe (20) innen durch eine Verzahnung (6) drehfest und axial verschiebbar mit dem Primärteil (1) und die Scheibe (21) durch eine Verzahnung (22) drehfest und axial verschiebbar mit dem Gehäusemantel (2) verbunden sind. An den einander zugekehrten Seiten sind die Kupplungsscheiben (20 und 21) etwa in der Mitte zwischen Außen- und Innendurchmesser mit je einem Kranz von sich axial erstreckenden Vorsprüngen (9) mit schrägen Seitenflächen (9a), versehen, zwischen denen sich kegelstumpfartige Rollenkörper (25) befinden, die durch Achsen (26) in einem Käfig (27) gehalten sind. An zwei diametral gegenüberliegenden Stellen (s. Fig. 3) der Kränze ist je eine Verzahnung (28) angeordnet, in die zwei im Käfig (27) angeordnete Führungszahnräder (29) eingreifen. Die Anwendung von Rollkörpern auf den Seitenflächen der Vorsprünge setzt die Reibung zwischen den Kupplungsscheiben (20, 21) herab. Beidseitig neben der Kupplungsscheiben (20 und 21) sind Pakete von als Tellerfedern ausgebildeten Federelementen (8) angeordnet, die von Bolzen (10) gehalten werden. Zwischen die Kupplungsscheibe (20) und die Federelemente (8) der rechten Seite ist wieder, wie in Fig. 1, eine Stützscheibe (15) eingeschaltet, die als Axiallager ausgebildet ist. Sie ist am Außenumfang mit einer Dichtung (12) versehen. Sie und die Kupplungsscheibe (21) sind auch wieder mit Anschlägen (11) zur Begrenzung der Verdrehung versehen. Bei Einleitung eines Drehmomentes werden die Federelemente (8) beider Seiten zugleich beaufschlagt, und zwar bei beiden Momentenrichtungen. Diese Ausführung ermöglicht gegenüber den von Fig. 1 einen größeren Verdrehwinkel.

Die Kupplung ist in besonderer Weise mit einem Umlauf von Dämpfungsflüssigkeit versehen. Dazu ist hier die Stützscheibe (15) unterhalb der Achsmitte mit einer Drosselöffnung (30) versehen. Durch die Stützscheibe (15) wird links ein Raum (Hochdruckraum) und rechts der Stützscheibe ein Raum (Niederdruckraum) gebildet. Bei entsprechender Ölfüllung baut sich infolge der Pumpbewegung der Scheiben (20, 21) im HD-Raum ein Druck auf, der einen Übertritt des Öls durch die Drosselöffnung (30) in den ND-Raum bewirkt, von wo das Öl durch die zentrale Öffnung (23) austritt und von wo es durch eine Leitung (nicht gezeichnet) der Öffnung (24) des HD-Raumes wieder zugeführt wird, wobei die Ölumführung mittels einer externen Pumpe und eines zwischengeschalteten Öltanks erfolgt, was besonders bei Kupplungen für große Antriebsleistungen erforderlich ist, die sehr heiß werden können.

In Fig. 4a bis d sind verschiedene Ausführungsformen der kranzartigen Vorsprünge im Querschnitt in Laststellung dargestellt:

a) zeigt Vorsprünge (9) mit Seitenflächen (9a) mit gleichem Neigungswinkel auf der Vorder- und Rückseite (Winkel ca. 20°),

b) zeigt Vorsprünge (9) mit Seitenflächen (9a und 9b) von unterschiedlichem Neigungswinkel (Winkel 20°/45°) auf der Vorder- und Rückseite, wodurch die Kupplung in der einen Drehrichtung eine weichere und in der anderen eine härtere Charakteristik erhält,

c) zeigt ein Profil wie in a), jedoch mit Rollkörpern (25) zwischen den Kränzen, die durch Achsen (26) in einem Käfig (27) gehalten sind. Hierdurch wird die Reibung zwischen den Verzahnungen herabgesetzt,

d) zeigt im oberen Kranz ein Profil mit Seitenflächen (9a) von 20°, die nach der Spitze hin stärker (auf 45°) ansteigen, (9c) wodurch sich bei steigender Belastung eine progressive Charakteristik der Kupplung ergibt. Im unteren Kranz sind die Rollkörper (25) in Mulden gehalten. Es besteht auch die Möglichkeit, bei der Ausführung nach c) die Seitenflächen (9a) mit Verzahnungen zu versehen, an denen die ebenfalls mit Verzahnungen versehenen Rollkörper abrollen können.

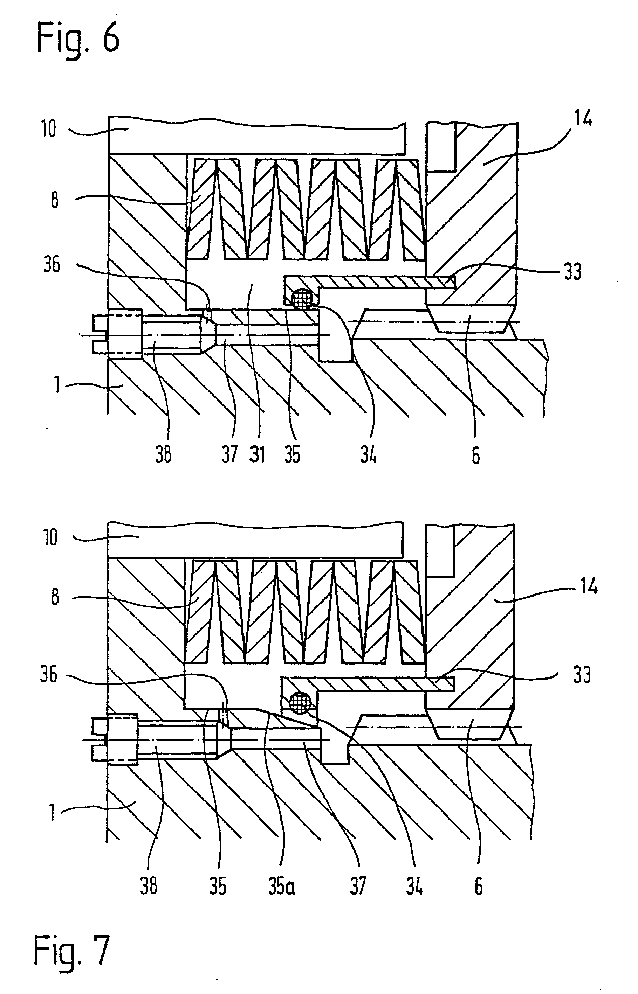

In der Fig. 5 bezeichnet – wie in der Fig. 1 – (1) das Primärteil, (14) die Kupplungsscheibe und (15) die an dieser anliegende, ringförmige Stützscheibe, welche die Federelemente (8) abdeckt, die auf Bolzen (10) innen geführt sind. Die Stützscheibe (15) ist innen und in analoger Weise auch außen mit Radialdichtungen (18) versehen, durch die sie gegenüber dem Gehäuse bzw. dem Primärteil (1) abgedichtet ist. Sie teilt den Kupplungsinnenraum in die rechte Kammer (41), welche die Federelemente (8) enthält und in die linke Kammer (42), in welcher die Kupplungsscheibe (14) mit den Vorsprüngen (9) angeordnet ist.

Bei dieser Anordnung strömt die Dämpfungsflüssigkeit über die Verzahnung (6) und die Verzahnung am Kuppelteil (14) (nicht bezeichnet) von der rechten in die linke Kammer, wobei die Verzahnungen als Drossel wirken.

Zur Regelung der Dämpfung ist gemäß Fig. 5 dieser Strömungsweg durch eine axial wirkende Dichtung (43) unterbrochen und die Stützscheibe (15) sowie die Kupplungsscheibe (14) sind an den Stellen der Bolzen (10) mit Bohrungen (44 bzw. 45) versehen, durch die nunmehr die Dämpfungsflüssigkeit strömen kann. In den Bohrungen (45) der Stützscheibe sind rohrartige Steuerteile (46) angeordnet, welche am äußeren Ende eine Radialdichtung (47) tragen, die in den zylindrischen Ausnehmungen (48) der Bolzen (10) gleitet. Senkrecht zur Bolzenachse sind in Richtung der Öffnungen versetzt, auf senkrechten Ebenen radiale Drosselöffnungen (49) angeordnet, die ins Innere der Kammer (41) führen. Die Drosselöffnungen (49) sind je für sich mit nach außerhalb der Kupplung führenden Kanälen (50) verbunden, an deren Enden sich Regelschrauben (51) (nur eine gezeichnet) befinden, durch die der Durchfluß auf die Öffnungen und damit die Dämpfung der Kupplung geregelt werden kann. Ähnlich wie in Fig. 1 werden auch hier bei einer Hubbewegung des Kuppelteils bzw. der Stützscheibe durch die Radialdichtung (47) der Steuerteile (46) die Drosselöffnungen (49) nacheinander verschlossen, wobei ihr Querschnitt außerdem durch Regelschrauben (51) verändert werden kann.

In den Fig. 6, 7 und 8 bezeichnet (1) das Primärteil und (14) wieder die Kupplungsscheibe, welche mit ihrer Verzahnung (6) drehfest und axial verschiebbar mit dem Primärteil (1) verbunden ist. Die Kupplungsscheibe (14) ist auch hier durch eine Dichtung gegenüber dem Gehäuse radial abgedichtet. In der Kammer (31) links des Kuppelteils sind die Federelemente (8) angeordnet, die innen durch die Bolzen (10) geführt sind. In der Kammer rechts von der Kupplungsscheibe (14) sind die, in Fig. 6 aber nicht gezeigten, Mitnehmer in Form von Vorsprüngen (9) angeordnet, die in entsprechende Elemente am Sekundärteil (5) eingreifen.

Bei der Hubbewegung der Kupplungsscheibe (14) wird Dämpfungsflüssigkeit aus der Kammer (31) in die rechte Kammer durch die Verzahnung (6) gedrückt. Beim Nachlassen des Drehmomentes strömt sie wieder zurück. Für die Regelung der Dämpfung ist gemäß Fig. 6 an der Kupplungsscheibe (14) ein rohrartiges Steuerteil (33) angeordnet, das am äußeren Ende eine Radialdichtung (34) trägt. Diese Dichtung gleitet beim Arbeitshub auf der zylindrischen Nabenfläche (35) des Primärteils (1). Am Ende der Nabenfläche sind am Umfang auf einer Ebene senkrecht zur Achse mehrere radiale Drosselöffnungen (36) angeordnet, die von den axial gerichteten, nach außen führenden Kanälen (37) ausgehen, wobei die Drosselöffnungen durch Regulierschrauben (38) von außen her verändert werden können. Man hat damit die Möglichkeit, die Durchströmung der Dämpfungsflüssigkeit über den gesamten Drehmomentverlauf ohne Demontage der Kupplung zu beeinflussen.

In Fig. 7 ist abweichend von Fig. 6 erst eine konisch ansteigende Fläche (35a) und dann eine zylindrische Nabenfläche (35) angeordnet, die am Ende wieder Drosselöffnungen (36) aufweist. In diesem Fall findet zunächst eine freie Durchströmung durch den Zwischenraum zwischen der Dichtung (34) und der konischen Fläche (35a) statt. Später wird der Durchfluß kleiner, und dann ganz verschlossen, worauf nur noch, wie in Fig. 6, die Strömung durch die Kanäle (37) und die Drosselöffnungen (36) erfolgt, die durch Regelschrauben (38) beeinflußt werden können. Mit dieser Regelung kann z.B. eine Dämpfungscharakteristik erzielt werden, die nur im oberen Teil abgeknickt ist.

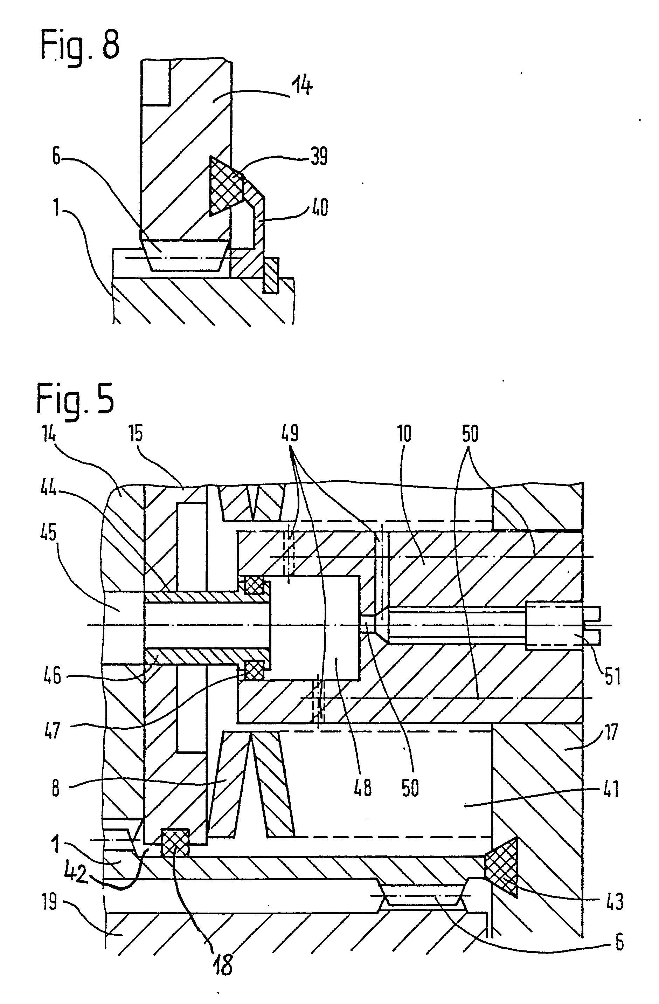

In Fig. 8 ist unabhängig von den vorgenannten Drosselverfahren rechts der Kupplungsscheibe in der Endlage ein Paar von Dichtungen (39, 40) vorgesehen, das bei Nullstellung der Kupplung geschlossen ist. Es hat den Zweck, bei Drehmomentumkehr (Nulldurchgang) die Strömung durch die Verzahnung kurzzeitig zu unterbrechen, was bei einer bestimmten Art der Ausbildung der Vorsprünge (9) von Vorteil ist.

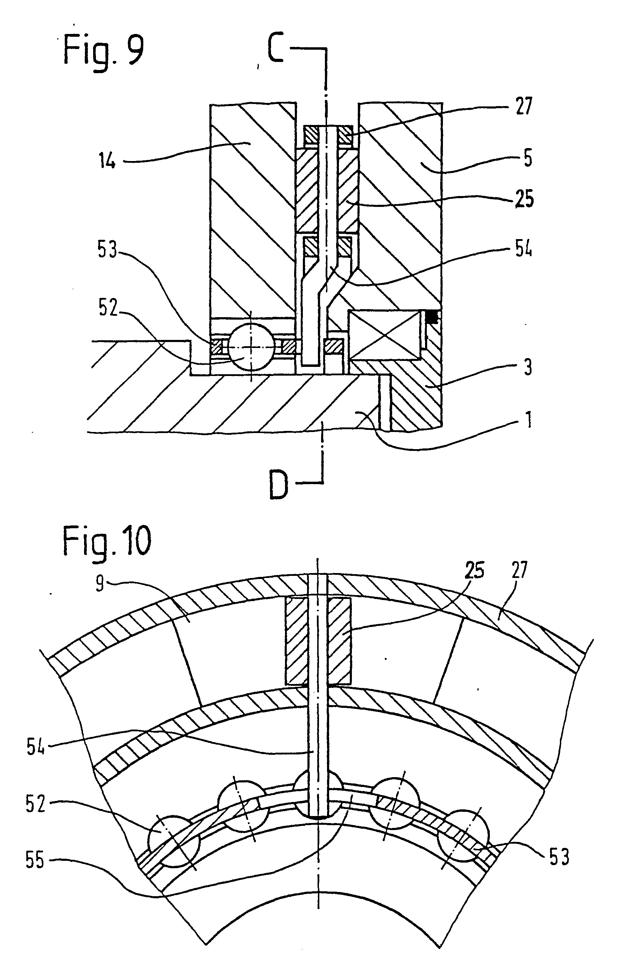

In den Fig. 9 und 10 ist das Primärteil, wie in der Fig. 1, mit (1) bezeichnet, die Bezugszahl (5) bezeichnet das Sekundärteil und (14) die Kupplungsscheibe, welche über Wälzkörper (52) drehfest und axial verschiebbar mit dem Primärteil (1) verbunden ist. Auf der seitlichen Wandung des Sekundärteils (5) und der dieser zugewandten Seite der Kupplungsscheibe (14) sind Kränze von sich axial erstreckenden Vorsprüngen (9) angeordnet, zwischen denen Rollkörper (25) liegen, die im Käfig (27) geführt werden. Die Wälzkörper (52) sind ebenfalls in einem Käfig (53) gehalten, der über Bolzen (54) mit dem äußeren Käfig (27) axial fest und tangential über Längsschlitze (55) relativ verschiebbar verbunden ist.

Bei Einleitung eines Drehmomentes in den Primärteil (1) wird die Kupplungsscheibe (14) durch die Rollkörper (25), die zwischen den Vorsprüngen (9) liegen, mitgenommen und axial verschoben, wobei durch die Axialkomponente Druck auf die Kupplungsscheibe (14) über die Federelemente (8) ausgeübt wird. Die Kupplungsscheibe (14) verschiebt sich unter dem Einfluß der äußeren Kräfte so lange axial, bis sich ein Gleichgewicht zwischen diesen und den Federkräften eingestellt hat. Die Käfige (27 und 53) mit den Rollkörpern (25) und den Wälzkörpern (52) legen dabei die Hälfte des Weges zurück, die die Kupplungsscheibe (14) ausführt. Der unterschiedliche tangentiale Weg der beiden Käfige wird durch Längsschlitze (55) am Käfig (53) ausgeglichen.

**Patentansprüche**

1. Drehelastische, schwingungsdämpfende Wellenkupplung mit Flüssigkeitsdämpfung, deren Drehmomentübertragung von einem Primär- (1) zu einem Sekundärteil (5) über ein zwischen diesen angeordnetes Kuppelteil erfolgt, das drehfest, aber mit Hilfe von auf einer senkrecht oder etwa senkrecht zur Drehachse gelegenen Fläche kranzartig angeordneten, sich axial erstreckenden Vorsprüngen (9) und Vertiefungen mit in Umfangsrichtung gegeneinander geneigten Seitenflächen nach Art einer Planverzahnung axial verschiebbar ist und auf Pakete von axial oder koaxial angeordneten Federelementen (8), insbesondere von Tellerfedern, wirkt, die sich am Sekundärteil abstützen, dadurch gekennzeichnet, daß die Federelemente (8) innen auf Bolzen (10) geführt sind und daß zwischen der Kupplungsscheibe (14, 20, 21) und den Federelementen (8) eine Stützscheibe (15) angeordnet ist, die alle Federelemente radial überdeckt und mittels eines Stiftes (16) gegenüber den Bolzen (10) der Federelemente gegen Drehung fixiert ist.

2. Wellenkupplung nach Anspruch 1, dadurch gekennzeichnet, daß die Stützscheibe (15) als Axiallager ausgebildet ist.

3. Wellenkupplung nach den Ansprüchen 1 und 2, dadurch gekennzeichnet, daß die Stützscheibe (15) am Außenumfang und gegebenenfalls auch am Innenumfang mit Dichtungen (12, 18) versehen ist und das Gehäuse in zwei Kammern (31, 32; 41, 42) unterteilt, wobei in der Nähe der Drehachse eine Drosselöffnung (30) zwischen den Kammern vorgesehen ist.

4. Wellenkupplung nach einem der Ansprüche 1 bis 3, dadurch gekennzeichnet, daß zwei konzentrische, gegeneinander verdrehbare Kupplungsscheiben (20, 21) vorgesehen sind, die auf den einander zugewandten Seiten mit den ineinandergreifenden, kranzartig angeordneten Vorsprüngen und Vertiefungen (9) versehen sind, wobei die eine Scheibe (20) innen durch eine Verzahnung (6) drehfest und axial verschiebbar mit dem Primärteil (1) und die andere Scheibe (21) außen durch eine Verzahnung (22) drehfest und axial verschiebbar mit dem Sekundärteil (5) verbunden ist und beiderseits des Scheibenpaares Pakete von Federelementen (8) angeordnet sind.

5. Wellenkupplung nach einem der Ansprüche 1 bis 4, dadurch gekennzeichnet, daß die kranzartig angeordneten Vorsprünge (9) etwa in der Mitte zwischen dem äußeren und dem inneren Durchmesser der Kupplungsscheiben (14, 20, 21) angeordnet sind.

6. Wellenkupplung nach den Ansprüchen 1 bis 5, dadurch gekennzeichnet, daß die Seitenflächen (9a) der kranzartig angeordneten Vorsprünge (9) eine Neigung von ca. 20° bis 45° haben.

7. Wellenkupplung nach den Ansprüchen 1 bis 6, dadurch gekennzeichnet, daß die Neigung der Seitenflächen (9a, 9b) der Vorderseite und der Rückseite der Vorsprünge (9) unterschiedlich ist.

8. Wellenkupplung nach den Ansprüchen 1 bis 7, dadurch gekennzeichnet, daß sich die Neigung der Seitenflächen (9a, 9c) in ihrem Verlauf ändert, insbesondere daß sie stärker wird.

9. Wellenkupplung nach einem der Ansprüche 1 bis 8, dadurch gekennzeichnet, daß zwischen den Seitenflächen (9a) der Vorsprünge (9) Rollkörper (25) angeordnet sind.

10. Wellenkupplung nach Anspruch 9, dadurch gekennzeichnet, daß die Rollkörper (25) in einem Käfig (27) geführt sind.

11. Wellenkupplung nach einem der Ansprüche 1 bis 10, dadurch gekennzeichnet, daß die Kupplungsscheiben (14, 20, 21) bzw. die Stützscheiben (15) mit Anschlägen (11) zur Begrenzung des Federweges versehen sind.

12. Wellenkupplung nach einem der Ansprüche 1 bis 11, dadurch gekennzeichnet, daß die Spannung der axial wirkenden Federelemente (8) von außen über Nachstellschrauben regelbar ist.

13. Wellenkupplung nach Anspruch 12, dadurch gekennzeichnet, daß die Spannung der Federelemente (8) so eingestellt ist, daß die Vorsprünge (9) der Kupplungsscheiben (14, 20, 21) bei übergroßem Drehmoment außer Eingriff kommen.

14. Wellenkupplung nach einem der Ansprüche 1 bis 13, dadurch gekennzeichnet, daß der Primär- (1) und der Sekundärteil (5) mit je einer Öffnung (23, 24) für die Zufuhr bzw. Abfuhr von Dämpfungsöl versehen sind.

15. Wellenkupplung nach einem der Ansprüche 1 bis 14, dadurch gekennzeichnet, daß der Primärteil (1), in welchen die antreibende Kupplungsscheibe (14, 20) eingreift, als doppelgelenkige Kupplung ausgebildet ist, die in eine Nabe (19) der antreibenden oder abtreibenden Maschine eingreift.

16. Wellenkupplung nach Anspruch 3, dadurch gekennzeichnet, daß an der Durchflußöffnung zwischen den Kammern (31, 41, 42) ein am äußeren Ende mit einer Radialdichtung (34, 47) versehenes rohrartiges Steuerteil (33, 46) angeordnet ist, welches mit entsprechenden, im Primär- oder Sekundärteil (1, 5) gelegenen, axial gerichteten Kanälen (37) zusammen wirkt, die mit mehreren auf verschiedenen Ebenen hintereinanderliegenden, ins Kupplungsinnere führenden Drosselöffnungen (36, 49) versehen sind, welche von der Radialdichtung während des Arbeitshubes überstrichen werden.

17. Wellenkupplung nach Anspruch 16, dadurch gekennzeichnet, daß mindestens eine Drosselöffnung (36, 49) von der Stirnseite der Kupplung her mit einer Regelschraube (38, 51) in ihrem Querschnitt veränderbar ist.

18. Wellenkupplung nach den Ansprüchen 16 und 17, dadurch gekennzeichnet, daß die Regelschraube (38, 51) als druckabhängiges Ventil ausgebildet ist, welches von außen nachstellbar ist.

19. Wellenkupplung nach Anspruch 16, dadurch gekennzeichnet, daß die Radialdichtung (34, 47) nur in Teilbereichen des Arbeitshubes wirksam ist.

20. Wellenkupplung nach Anspruch 3, dadurch gekennzeichnet, daß als Durchflußöffnung zwischen den Kammern die Kupplungsverzahnung (6) dient, wobei das Steuerteil (33) an der Kupplungsscheibe (14) angeordnet ist.

21. Wellenkupplung nach Anspruch 16, dadurch gekennzeichnet, daß als Durchflußöffnung zwischen den Kammern (42, 41) Bohrungen (44, 45) in der Stützscheibe (15) und in der anliegenden Kupplungsscheibe (14) vorgesehen sind, die im Bereich der Bolzen (10) liegen, wobei an jeder Bohrung (44) der Stützscheibe (15) ein Steuerteil (46) angeordnet ist.

22. Wellenkupplung nach Anspruch 21, dadurch gekennzeichnet, daß auf der dem Steuerteil (46) abgewandten Seite der Kupplungsscheibe (14) eine Axialdichtung (39) angeordnet ist, die in der Nullstellung des Kuppelteils an einer auf dem Primärteil (1) angeordneten Axialdichtung (40) anliegt.

23. Wellenkupplung nach Anspruch 10, dadurch gekennzeichnet, daß die Kupplungsscheibe (14) auf dem Primärteil (1) über eine Kugelwälzverbindung (52, 53) gelagert ist.

24. Wellenkupplung nach Anspruch 23, dadurch gekennzeichnet, daß der Käfig (27) der Rollkörper über Bolzen (54) in axialer Richtung fest mit einem Käfig (53) verbunden ist, der zur Kugelwälzverbindung gehört, und daß die tangentiale Relativbewegung zwischen den Käfigen (27, 53) durch Längsschlitze (55) im Käfig (53) ausgeglichen wird.

## Claims

1. A torsionally resilient, vibration-damping shaft coupling with liquid damping, the torque transmission of which, from a primary member (1) to a secondary member (5), is effected via a coupling member which is disposed between these and which is held against rotation but is axially displaceable by means of projections (9) extending axially and arranged in a ring on a surface perpendicular or substantially perpendicular to the axis of rotation and of recesses having lateral faces inclined towards one another in the circumferential direction in the manner of a crown gear, which coupling member acts on sets of spring elements (8), particularly cup springs, which are arranged axially or coaxially and are supported on the secondary member, characterised in that the spring elements (8) are guided on pins (10) at the inside and that disposed between the clutch disc (14, 20, 21) and the spring elements (8) is a supporting disc (15) which covers all the spring elements radially and which is held against rotation in relation to the pins (10) of the spring elements by means of a pin (16).

2. A shaft coupling according to Claim 1, characterised in that the supporting disc (15) is constructed in the form of a thrust bearing.

3. A shaft coupling according to Claims 1 and 2, characterised in that the supporting disc (15) is provided at the outer circumference and possibly also at the inner circumference, with seals (12, 18), and divides the housing into two chambers (31, 32;

41, 42) a throttle opening (30) being provided between the chambers in the vicinity of the axis of rotation.

4. A shaft coupling according to any one of Claims 1 to 3, characterised in that two concentric clutch discs (20, 21) are provided which can be turned in relation to one another and which are provided, at their adjacent sides, with the interengaging projections and recesses (9) arranged in a ring, the one disc (20) being connected at the inside, by teeth (6), to the primary member (1) for rotation therewith but not in relation thereto and for axial displacement, and the other disc (21) being connected at the outside, by teeth (22), to the secondary member (5) for rotation therewith but not in relation thereto and for axial displacement, and sets of spring elements (8) being disposed at both sides of the pair of discs.

5. A shaft coupling according to any one of Claims 1 to 4, characterised in that the projections (9) arranged in a ring are arranged substantially in the middle between the outer and the inner diameters of the clutch discs (14, 20, 21).

6. A shaft coupling according to Claims 1 to 5, characterised in that the lateral faces (9a) of the projections (9) arranged in a ring have an inclination of about 20° to 45°.

7. A shaft coupling according to Claims 1 to 6, characterised in that the inclination of the lateral faces (9a, 9b) of the front and back of the projections (9) is different.

8. A shaft coupling according to Claims 1 to 7, characterised in that the inclination of the lateral faces (9a, 9c) changes during its course, particularly that it becomes greater.

9. A shaft coupling according to any one of Claims 1 to 8, characterised in that rolling bodies (25) are disposed between the lateral faces (9a) of the projections (9).

10. A shaft coupling according to Claim 9, characterised in that the rolling bodies (25) are guided in a cage (27).

11. A shaft coupling according to any one of Claims 1 to 10, characterised in that the clutch discs (14, 20, 21) or the supporting discs (15) are provided with stops (11) to limit the spring excursion.

12. A shaft coupling according to any one of Claims 1 to 11, characterised in that the tension of the spring elements (8) acting axially is adjustable from the outside via adjusting screws.

13. A shaft coupling according to Claim 12, characterised in that the tension of the spring elements (8) is adjusted so that the projections (9) of the clutch discs (14, 20, 21) come out of engagement in the event of excessive torque.

14. A shaft coupling accouping to any one of Claims 1 to 13, characterised in that the primary member (1) and the secondary member (5) are each provided with an opening (23, 24) for the supply or offtake of damping oil.

15. A shaft coupling according to any one of Claims 1 to 14, characterised in that the primary member (1), in which the driving clutch disc (14, 20) engages, is constructed in the form of a double-jointed coupling which engages in a hub (19) of the driving or driven machine.

16. A shaft coupling according to Claim 3, characterised in that disposed at the flow passage between the chambers (31, 41, 42) is a tubular control member (33, 46) which is provided with a radial seal (34, 47) at the outer end and which cooperates with corresponding, axially directed channels (37) which are situated in the primary or secondary member (1, 5) and are provided with a plurality of throttle openings (36, 49) which are situated one behind the other in various planes and lead into the interior of the coupling and which are brushed over by the radial seal during the working stroke.

17. A shaft coupling according to Claim 16, characterised in that at least one throttle opening (36, 49) can be varied in its cross-section by means of a regulator (38, 51) from the face of the coupling.

18. A shaft coupling according to Claims 16 and 17, characterised in that the regulator (38, 51) is constructed in the form of a pressure-responsive valve which is adjustable from the outside.

19. A shaft coupling according to Claim 16, characterised in that the radial seal (34, 47) is effective only in parts of the working stroke.

20. A shaft coupling according to Claim 3, characterised in that the coupling teeth (6) serve as a flow passage between the chambers and the control member (33) is disposed on the clutch disc (14).

21. A shaft coupling according to Claim 16, characterised in that bores (44, 45) in the supporting disc (15) and in the adjacent clutch disc (14) are provided as a flow passage between the chambers (42, 41), which bores are situated in the region of the pins (10), while a control member (46) is disposed at each bore (44) of the supporting disc (15).

22. A shaft coupling according to Claim 21, characterised in that disposed on the side of the clutch disc (14) remote from the control member (46) is an axial seal (39) which, in the neutral position of the coupling member, bears against an axial seal (40) disposed on the primary member (1).

23. A shaft coupling according to Claim 10, characterised in that the clutch disc (14) is mounted on the primary member (1) via a rolling-ball connection (52, 53).

24. A shaft coupling according to Claim 23, characterised in that the cage (27) of the rolling bodies is rigidly connected, in the axial direction, via pins (54), to a cage (53) which belongs to the rolling-ball connection and that the relative tangential movement between the cages (27, 53) is compensated by elongated slots (55) in the cage (53).

**Revendications**

1. Accouplement élastique amortissant les variations de couple entre des arbres rotatifs à amortissement par fluide, dont la transmission de couple de rotation d'un élément primaire (1) à un élément secondaire (5) a lieu par l'intermédiaire d'un élément d'accouplement prévu entre l'élément primaire et l'élément secondaire, élément d'accouplement qui est fixe contre toute rotation, mais qui peut être déplacé dans le sens axial par l'intermédiaire de saillies (9) et de creux qui suivent le sens axial et qui sont prévus en couronne sur une face occupant une position perpendiculaire ou une position à peu près perpendiculaire à l'axe de rotation, saillies et creux qui présentent des faces latérales inclinées les unes par rapport aux autres dans le sens périphérique et qui agissent à la manière d'une denture plane, l'élément d'accouplement prévu entre l'élément primaire et l'élément secondaire agissant sur des paquets d'éléments de ressort (8) prévus axialement ou coaxialement, en particulier sur des ressorts Belleville, qui prennent appui sur l'élément secondaire, l'accouplement élastique amortissant les variations de couple entre des arbres rotatifs étant caractérisé en ce que les éléments de ressort (8) sont guidés sur des axes (10) qui les traversent intérieurement, et en ce qu'il est prévu, entre le disque d'accouplement (14, 20, 21) et les éléments de ressort (8), un disque d'appui (15) qui couvre tous les éléments de ressort (8) dans le sens radial et qui est maintenu contre toute rotation par une broche (16), par rapport aux axes (10) sur lesquels les éléments de ressort (8) sont guidés.

2. Accouplement élastique amortissant les variations de couple entre des arbres rotatifs suivant la revendication 1, caractérisé en ce que le disque d'appui (15) se présente sous la forme d'un palier axial.

3. Accouplement élastique amortissant les variations de couple entre des arbres rotatifs suivant les revendications 1 et 2, caractérisé en ce que le disque d'appui (15) est, à la périphérie externe et, éventuellement, à la périphérie interne également, muni de joints d'étanchéité (12, 18) et en ce qu'il divise le carter en deux chambres (31, 32; 41, 42), une ouverture d'étranglement (30) étant, au voisinage de l'axe de rotation, prévue entre les chambres.

4. Accouplement élastique amortissant les variations de couple entre des arbres rotatifs suivant l'une quelconque des revendications 1 à 3, caractérisé en ce qu'il comporte deux disques d'accouplement (20, 21) concentriques l'un par rapport à l'autre et pouvant tourner l'une par rapport à l'autre, qui sont prévus de telle sorte qu'ils présentent, aux faces tournées l'une vers l'autre, des saillies (9) et des creux disposés en couronne qui se trouvent en engagement les unes avec les autres, l'un (20) de ces disques d'accouplement (20 et 21) étant relié à l'élément primaire (1) intérieurement par une denture (6) qu'il présente, de façon qu'il soit maintenu contre toute rotation par rapport à cet élément primaire (1) et qu'il puisse être déplacé dans le sens axial, et l'autre (21) de ces disques d'accouplement (20 et 21) étant relié à l'élément secondaire (5) extérieurement par une denture (22) qu'il présente, de façon qu'il soit maintenu contre toute rotation par rapport à cet élément secondaire (5) et qu'il puisse être déplacé dans le sens axial, et des paquets d'éléments de ressort (8) étant prévus aux deux côtés de la paire de disques d'accouplement que constituent les disques d'accouplement (20 et 21).

5. Accouplement élastique amortissant les variations de couple entre des arbres rotatifs suivant l'une quelconque des revendications 1 à 4, caractérisé en ce que les saillies (9), qui se présentent en couronne, sont prévues à peu près en un endroit médian entre le diamètre externe et le diamètre interne des disques d'accouplement (14, 20, 21).

6. Accouplement élastique amortissant les variations de couple entre des arbres rotatifs suivant les revendications 1 à 5, caractérisé en ce que les faces latérales (9a) des saillies (9), qui se présentent en couronne, sont prévues sous un angle d'inclinaison qui peut aller d'environ 20 à 45.

7. Accouplement élastique amortissant les variations de couple entre des arbres rotatifs suivant les revendications 1 à 6, caractérisé en ce que l'inclinaison que présentent les faces latérales (9a) du côté antérieur des saillies (9) est différente de l'inclinaison que présentent les faces latérales (9b) du côté postérieur de ces saillies (9).

8. Accouplement élastique amortissant les variations de couple entre des arbres rotatifs suivant les revendications 1 à 7, caractérisé en ce que l'inclinaison que présentent les faces latérales (9a, 9c) des saillies (9) suit une pente qui se modifie, en particulier qui devient plus raide.

9. Accouplement élastique amortissant les variations de couple entre des arbres rotatifs suivant l'une quelconque des revendications 1 à 8, caractérisé en ce qu'il comporte des éléments de roulement (25) qui sont prévus entre les faces latérales (9a) des saillies (9).

10. Accouplement élastique amortissant les variations de couple entre des arbres rotatifs suivant la revendication 9, caractérisé en ce que les éléments de roulement (25) prévus entre les faces latérales (9a) des saillies (9) sont guidés dans une cage (27).

11. Accouplement élastique amortissant les variations de couple entre des arbres rotatifs suivant l'une quelconque des revendications 1 à 10, caractérisé en ce que les disques d'accouplement (14, 20, 21) et les disques d'appui (15) présentent des crans d'arrêt (11) qui sont destinés à limiter la course des éléments de ressort (8).

12. Accouplement élastique amortissant les variations de couple entre des arbres rotatifs suivant l'une quelconque des revendications 1 à 11, caractérisé en ce que la tension des éléments de ressort (8), qui agissent dans le sens axial, peut être réglée de l'extérieur à l'aide de vis de réglage.

13. Accouplement élastique amortissant les variations de couple entre des arbres rotatifs suivant la revendication 12, caractérisé en ce que la tension des éléments de ressort (8) a été réglée de telle sorte que les saillies (9) dont sont munis les disques d'accouplement (14, 20, 21) quittent leur état d'engagement avec les creux correspondants en cas de couple de rotation excessivement élevé.

14. Accouplement élastique amortissant les variations de couple entre des arbres rotatifs suivant l'une quelconque des revendications 1 à 13, caractérisé en ce que l'élément primaire (1) et l'élément secondaire (5) sont percés respectivement d'ouvertures par lesquelles de l'huile d'amortissement peut être amenée et peut s'écouler, l'élément primaire (1) étant percé d'une ouverture (24) et l'élément secondaire (5) étant percé d'une ouverture (23).

15. Accouplement élastique amortissant les variations de couple entre des arbres rotatifs suivant l'une quelconque des revendications 1 à 14, caractérisé en ce que l'élément primaire (1), dans lequel le disque d'accouplement de commande ou menant (14, 20) est en prise, est prévu sous la forme d'un accouplement à double articulation qui se trouve en engagement dans un moyeu (19) de la machine de commande ou machine menante ou de la machine de sortie ou machine menée.

16. Accouplement élastique amortissant les variations de couple entre des arbres rotatifs suivant la revendication 3, caractérisé en ce qu'à l'ouverture de passage ou d'écoulement entre les chambres (31, 41, 42), il est prévu un élément de commande ou de réglage (33, 46) du genre tuyau, qui est muni à l'extrémité externe d'un joint d'étanchéité radial (34, 47), élément de commande ou de réglage (33, 46) qui coopère avec des canaux (37) correspondants prévus dans l'élément primaire (1) ou dans l'élément secondaire (5) et dirigée dans le sens axial, canaux (37) qui sont percés de plusieurs ouvertures d'étranglement (36, 49) disposées en succession l'une à l'arrière de l'autre dans différents plans et menant à l'intérieur de l'accouplement, ouvertures d'étranglement (36, 49) qui sont balayées par le joint d'étanchéité radial pendant la course de travail.

17. Accouplement élastique amortissant les variations de couple entre des arbres rotatifs suivant la revendication 16, caractérisé en ce que la section transversale de l'une au moins des ouvertures d'étranglement (36, 49) peut être modifiée, à partir du côté d'extrémité de l'accouplement, à l'aide d'une vis de réglage (38, 51).

18. Accouplement élastique amortissant les variations de couple entre des arbres rotatifs suivant les revendications 16 et 17, caractérisé en ce que la vis de réglage (38, 51) qui sert à modifier la section transversale de l'une au moins des ouvertures d'étranglement (36, 49) joue le rôle d'une valve agissant en fonction de la pression, valve qui peut être réglée de l'extérieur.

19. Accouplement élastique amortissant les variations de couple entre des arbres rotatifs suivant la revendication 16, caractérisé en ce que le joint radial (34, 47) dont l'élément de commande ou de réglage (33, 46) est muni à l'extrémité externe est prévu de telle sorte qu'il ne puisse agir que sur des zones partielles de la course de travail.

20. Accouplement élastique amortissant les variations de couple entre des arbres rotatifs suivant la revendication 3, caractérisé en ce que c'est la denture d'accouplement (6) qui joue le rôle d'ouverture de passage ou d'écoulement entre les chambres, l'élément de commande ou de réglage (33) étant prévu dans le disque d'accouplement (14).

21. Accouplement élastique amortissant les variations de couple entre des arbres rotatifs suivant la revendication 16, caractérisé en ce qu'il est prévu, comme ouverture de passage ou d'écoulement entre les chambres (42, 41), des passages (44, 45) qui sont formés dans le disque d'appui (15) et dans le disque d'accouplement (14) s'appliquant à ce disque d'appui (15), passages (44, 45) qui se trouvent dans la zone des axes (10) qui traversent intérieurement les éléments de ressort (8), une valve de commande ou de réglage (46) étant prévue à chacun des passages (44) qui sont formés dans le disque d'appui (15).

22. Accouplement élastique amortissant les variations de couple entre des arbres rotatifs suivant la revendication 21, caractérisé en ce qu'au côté du disque d'accouplement (14) qui est opposé à l'élément de commande ou de réglage (46), il est prévu un joint d'étanchéité axial (39) qui, pour la position neutre ou position de repos de l'élément d'accouplement, s'applique à un joint d'étanchéité axial (40) qui est prévu sur l'élément primaire (1).

23. Accouplement élastique amortissant les variations de couple entre des arbres rotatifs suivant la revendication 10, caractérisé en ce que le disque d'accouplement (14) est monté sur l'élément primaire (1) par l'intermédiaire d'une liaison à roulement à billes (52, 53).

24. Accouplement élastique amortissant les variations de couple entre des arbres rotatifs suivant la revendication 23, caractérisé en ce que la cage (27) dans laquelle sont guidés les éléments de roulement (25) est fixée par l'intermédiaire d'axes (54) dans le sens axial à une cage (53) de façon à être solidaire de cette cage (53), qui appartient à la liaison à roulement à billes, et en ce que le déplacement relatif tangentiel entre les cages (27, 53) est compensé par des fentes longitudinales (55) qui sont formées dans la cage (53).

Fig. 1

# Fig. 2

# Fig. 3

28      29      Schnitt A-B      27

9a    28    29                          25    26

a)

9    9a

b)

9    9b    9a

c)

25    26    9a    9    9a    26

d)

25    9  9c    9a

# Fig.4

## Fig. 6

## Fig. 7

**Fig. 8**

14
6
1
39
40

**Fig. 5**

14
15
49
10
50
44
45
46
47
8
1
42
19
18
48
50
17
41
43
6
51

## Fig. 9

## Fig. 10